# EUROPEAN PATENT APPLICATION

(11) **EP 2 618 267 A1**
(43) Date of publication of application: **24.07.2013**
(21) Application number: 13150892.1
(22) Date of filing: 10.01.2013
(51) Int. Cl.: G06F 15/78, G06F 11/16, G11C 7/10, G11C 8/16

(54) **Deterministic high integrity multi-processor system on a chip**

(30) Priority: 23.01.2012 US 201213355721
(71) Applicant: Honeywell International Inc., Morristown, NJ 07962-2245 (US)
(72) Inventor: Wilt, Nicholas, Morristown, NJ New Jersey 07962-2245 (US); Gray, Scott, Morristown, NJ New Jersey 07962-2245 (US); Fletcher, Mitch, Morristown, NJ New Jersey 07962-2245 (US)
(74) Representative: Houghton, Mark Phillip

(57) **Abstract**

Systems integrated into a single electronic chip are provided for. The systems include a primary shared bus, a secondary shared bus and an embedded dynamic random access memory (eDRAM) including a first port and a second port. The systems also include a primary processor in operable communication with the eDRAM via the first port; and a secondary processor in operable communication with the eDRAM via the secondary bus and the second port, wherein the primary and secondary processors are operating in synchronization.

## Description

### TECHNICAL FIELD

The technical field generally relates to systems on a chip, and more particularly relates to minimizing the volume and weight of high integrity systems consistent with low power dissipation, and low input/output (I/O) processing latency.

### BACKGROUND

Current System-on-Chip ("SoC") architectures use multiple processor cores in both asymmetric multi-processing (AMP) and symmetric multi-processing (SMP) configurations with shared resources including shared L2 and L3 caches, shared I/O interfaces and/or shared memory. The use of shared resources may result in time indetermination and component latency that reduces performance. Further, current solutions also do not provide chip architectures that permit lockstep self-checking pair capability.

Accordingly, for space and other aerospace applications where memory size requirements are more manageable, it is desirable to have a system's main memory on the chip. It is also desirable to offload I/O processing from the main computational processor and yet maintain high integrity with external I/O interfaces.

### BRIEF SUMMARY

A system is integrated on a single die. The system integrated on a single die comprises a primary shared bus, a secondary shared bus and an embedded dynamic random access memory (eDRAM). The system also includes a primary processor in operable communication with the eDRAM and a secondary processor in operable communication with the eDRAM via the secondary bus. The primary and secondary processors operate in synchronization. The system further comprises a first I/O external interface with a self checking pair (SCP) logic module in operable communication with the primary processor via the primary shared bus and a second I/O external interface with a SCP logic module in operable communication with the secondary processors via the secondary shared bus.

A system integrated on a single die. The system comprises a primary shared bus, a secondary shared bus and an embedded dynamic random access memory (eDRAM) including a first port and a second port. The system further comprises a primary processor in operable communication with the eDRAM via the first port; and a secondary processor in operable communication with the eDRAM via the secondary bus and the second port. The primary and secondary processors are operating in synchronization.

Furthermore, other desirable features and characteristics of the present invention will become apparent from the subsequent detailed description of the invention and the appended claims, taken in conjunction with the accompanying drawings and this background.

### BRIEF DESCRIPTION OF THE DRAWINGS

The present invention will hereinafter be described in conjunction with the following drawing figures, wherein like numerals denote like elements, and

FIG. 1 is a simplified block diagram of a high integrity dual SoC system;

FIG. 2 is a simplified block diagram of an SoC system according to embodiments;

FIG. 3 is simplified exemplary self checking pair (SCP) logic system incorporated into embodiments;

FIG. 4 is another embodiment of a high integrity SoC; and

FIG. 5 is an alternative embodiment of a high integrity SoC system.

### DETAILED DESCRIPTION

The following detailed description is merely exemplary in nature and is not intended to limit the application and uses of the subject matter disclosed herein. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the embodiments and not to limit the scope of the invention which is defined by the claims. Furthermore, there is no intention to be bound by any expressed or implied theory presented in the preceding technical field, background, brief summary, or the following detailed description.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps being described below generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of computer readable storage medium known in the art. An exemplary computer readable storage medium is coupled to the processor such the processor can read information from, and write information to, the storage medium. In the alternative, the computer readable storage medium may be integral to the processor. The processor and the storage medium may reside in an ASIC. The ASIC may reside in a user terminal. In the alternative, the processor and the storage medium may reside as discrete components in a user terminal

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the following detailed description, it should be appreciated that a vast number of variations exist. It should also be appreciated that the exemplary embodiment or exemplary embodiments are only examples, and are not intended to limit the scope, applicability, or configuration of the disclosed subject matter in any way. Rather, the following detailed description will provide those skilled in the art with a convenient road map for implementing an exemplary embodiment. It being understood that various changes may be made in the function and arrangement of elements described in an exemplary embodiment without departing from the scope of the of the disclosed subject matter as set forth in the appended claims.

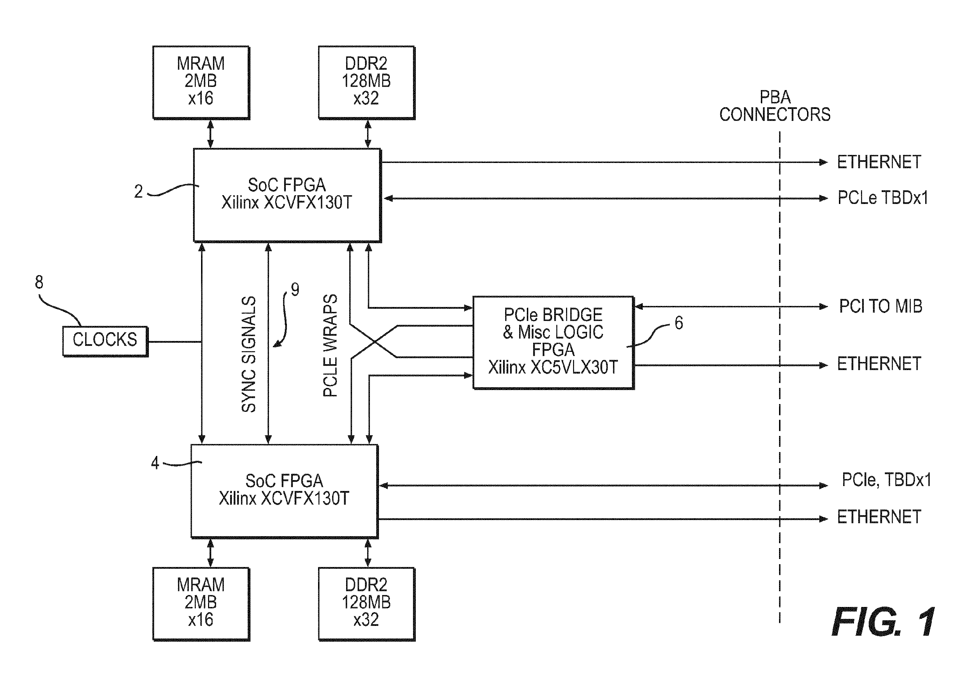

FIG. 1 is a simplified schematic of a high integrity, self-checking circuit arrangement utilizing two identical, or functionally identical, systems-on-a-chip ("SoC") (2, 4) that are lock stepped together by a common clock or clock function 8 and associated synchronization signals 9. As non-limiting examples, the SoC's (2, 4) are illustrated as model XCVFX130T field programmable gate arrays (FPGA) that are manufactured by Xilinx, Inc. headquartered in San Jose, California. However, those of ordinary skill in the art will appreciate that other application-specific integrated circuit (ASIC) models or custom designed ASICs may be the preferred approach to accommodate a particular design need such as the IBM 45 nm series of systems on a chip.

Each of the pair of SoCs are in communication with each other via a bridging device 6 as may be known in the art. As a non-limiting example, the bridging device 6 may be a PCIe bridge with supporting logic. As a further example, the bridge may be constructed using a suitably configured model XC5VLX20T FPGA from Xilinx, Inc. The use of a serial bus permits the reduction in the number of cable pins thus allowing the use of a flat pack (pins on the side of the device) instead of using a pin grid array.

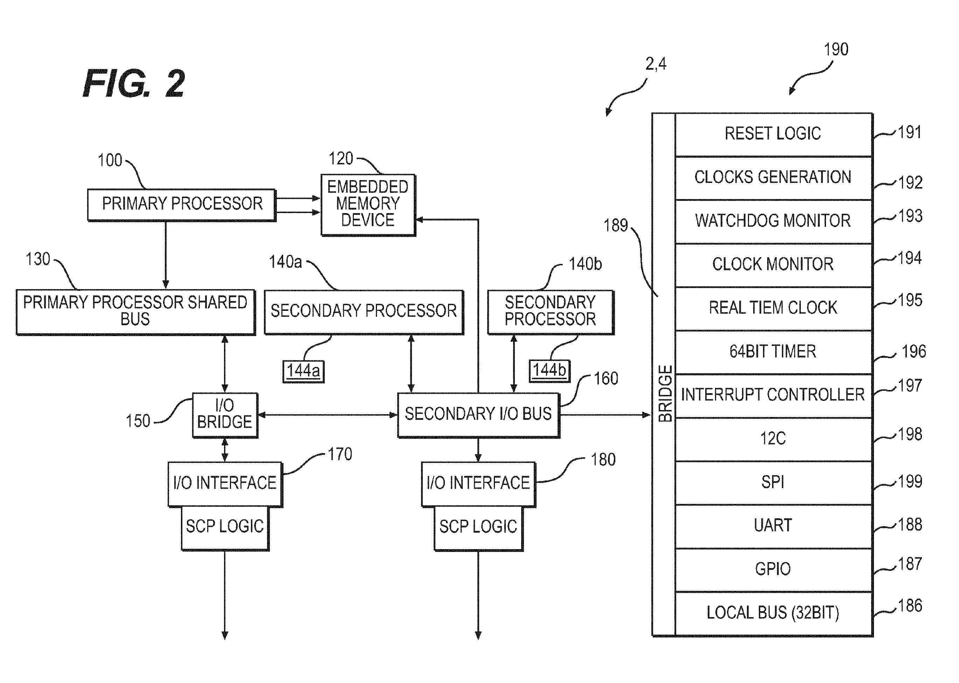

FIG. 2 is a simplified exemplary block diagram of a low latency, low power, least volume SoC (2, 4). The SoC 2 includes a primary processor 100. The primary processor may be any suitable processor core known in the art or that may be developed in the future. It should be noted that the arrow heads on the data connections in FIG. 2 indicate data access control via a set of I/O tables. Data flow is bidirectional across all connections.

The exemplary SoC (2, 4) further includes a memory device 120 embedded in the same die as the primary processor in order to minimize latencies and non-deterministic operational inefficiencies. Memory device 120 is the main memory of SoC 2 and contains the primary processor's executable code, tables and data, which may be pre-loaded or may be loaded from external memory such as magneto-resistive RAM (MRAM), and/or flash memory, and/or any other non-volatile memory storage medium.

The embedded memory device may be any volatile or non-volatile chip based memory device currently in existence or that may be developed in the future. The memory device 120 allows the primary processor 100 direct access to multiple external I/O interfaces (170, 180). I/O memory size may be selectable in tiled segments. For example, an I/O memory segment may be eight megabytes.

Non-limiting examples of chip based memory devices may include random access memory (RAM), dynamic random access memory (DRAM), embedded DRAM (eDRAM), synchronous RAM (SRAM), Thyristor RAM (TRAM), zero-capacitor RAM (ZRAM^{®}), twin-transistor RAM (TTRAM), read only memory (ROM), programmable ROM (PROM), erasable PROM (EPROM), electronically erasable PROM (EEPROM), flash memory, magneto-resistive RAM (MRAM). The memory may have Error Correcting Code (ECC) circuitry for testing and correcting the data as it passes in and out of memory.

The exemplary SoC 2 further comprises at least a primary shared bus 130 and a secondary shared bus 160. The primary shared 130 bus allows communication between the primary processor 100 and one or more subsystems such as the external I/O interfaces (170, 180). Although data flow is bidirectional between the primary processor 100 and the primary data bus 130, the primary processor controls I/O data access to itself. Such access may be controlled via an I/O state machine that performs specific I/O tasks within specific time windows according to a set of instruction tables (not shown) stored within one of the controller caches (102, 104) or memory device 120. In some embodiments the instruction table (not shown) does not permit communication between the primary processor 100 and the secondary processors (140a/140b) via the primary processor shared bus 130. As such, all communication between the primary processor 100 and the secondary processors (140a/140b) may be accomplished via the embedded memory device 120. The primary shared bus may be any suitable communication bus architecture known in the art or that may be developed in the future.

The exemplary SoC 2 further comprises one or more secondary processors (140a/140b). Other equivalent embodiments may have more than two secondary processors (140a/140b). However, in preferred embodiments one of several secondary processors may handle input I/O processing while the other secondary processor may handle output I/O processing. Exemplary secondary I/O processors (140a/140b) may be any suitable processors known in the art or that may be developed in the future. The secondary processors need not be identical processors.

The secondary processors (140a/140b) interface directly with the I/O area of the memory device 120 via a secondary bus 160. The secondary bus 160 may be any suitable bus known in the art or that may be developed in the future. This direct interface may require an a priori dual buffering arrangement or the use of semaphores to prevent primary processor access to certain data while that data is being accessed by another device. A semaphore is a variable or abstract data type that provides a simple but useful abstraction for controlling access by multiple processes to a common resource in a parallel programming environment.

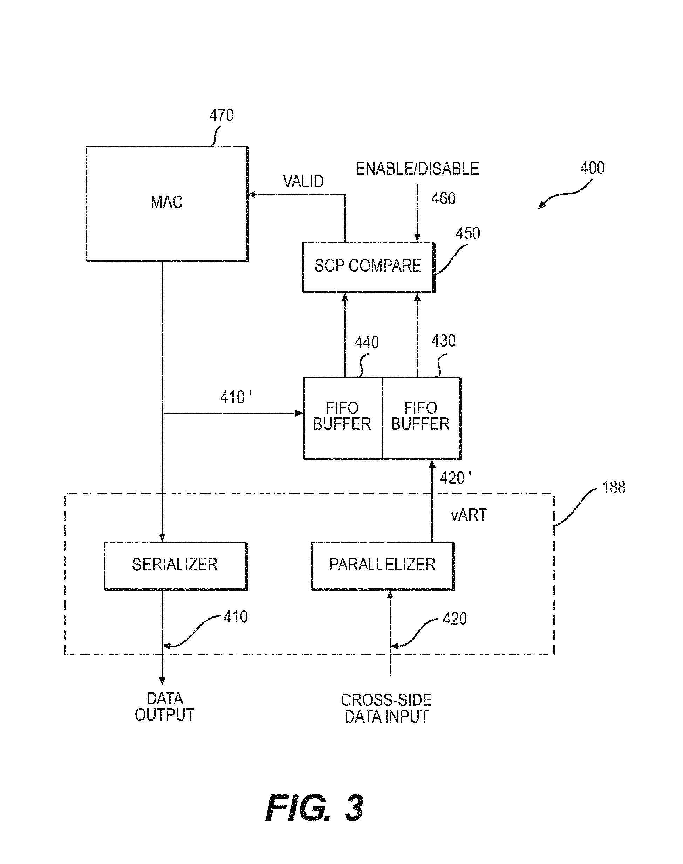

The secondary bus 160 provides external I/O access to the primary processor 100 and the secondary processors (140a/140b) via external I/O interfaces (170,180). The external I/O interfaces (170,180) may be dual PCIe and/or Serial Rapid I/O and/or Spacewire interfaces with self checking pair (SCP) logic (See, FIG. 3). Although data flow is bidirectional between the secondary processors 140a/a40b and memory device 120, the secondary processors (140a/140b) limit I/O data access to themselves. Such access may be controlled via an I/O state machine that performs specific I/O tasks within specific time windows according to a set of instruction tables (144a/144b) that may be stored within one or both of the instruction eDRAMs (141a, 141b). In some embodiments the instruction tables (141a/141b) do not permit communication between the primary processor 100 and the secondary processors (140a/140b) via the primary processor shard bus 130. As such, all communication between the primary processor 100 and the secondary processors (140a/140b) is accomplished via the embedded memory device 120.

FIG. 3 is a simplified block diagram illustrating an exemplary SCP logic system 400. Associated with each system output 410 is a serial cross side input 420 from another identical paired SoC 4. Once de-serialized (See, e.g. FIG. 2, UART 188), the side input 420 from the companion SoC 4 is compared with the output 410 from the SoC 2. First-in-first-out (FIFO) registers (430, 440) may be used to synchronize the two data streams for ease of comparison by the SCP comparison logic module 450. SCP logic is well known in the art and will not be discussed further herein. A comparison invalidity event may cause the media access controller (MAC) 470 to disable any further output 410' from the SoC 2. In the case where the output from SoC 2 is a low integrity output, the secondary processor(s) (See, FIG. 1, 140a/140b) may disable (460) the SCP comparison logic module 450.

Referring back to FIG. 2, the primary processor 100 and the secondary Bus 160 are in coupled to the I/O interface 170 via an I/O bridge 150. The I/O bridge 150 is essentially a n-way switch and may be any suitable bridge known in the art or that may be developed in the future. The secondary bus 160 may also be in operable communication with multi-access bridge 189. Multi-access bridge 189 may be synchronous with both the primary processor shared bus 130 and the secondary bus 160. Multi-access bridge 189 provides access to a number of utilities and support programs 190. For example, support programs 190 may include reset logic module 191.

Reset logic module 191 reduces power usage within a SoC 2. When in reset mode the secondary processor clocks and any unused peripheral clocks are gated off. Clocks Generation Module 192 provides a timing standard (SYSCLOCK) for generating various synchronous clocks for SoC 2. SYSCLOCK is the primary platform for the SoC 2 and is set from frequency selection configuration pins using a phased locked loop. The primary processor 100 and each secondary processor (140a/140b) have their own phased locked loop and a SYSCLOCK multiplier. The clock rates for the primary processor shared bus, the secondary I/O bus and the tertiary bridge 189 may thus be set at a multiple of the SYSCLOCK rate or partial rates such as half the rate of the SYSCLOCK rate.

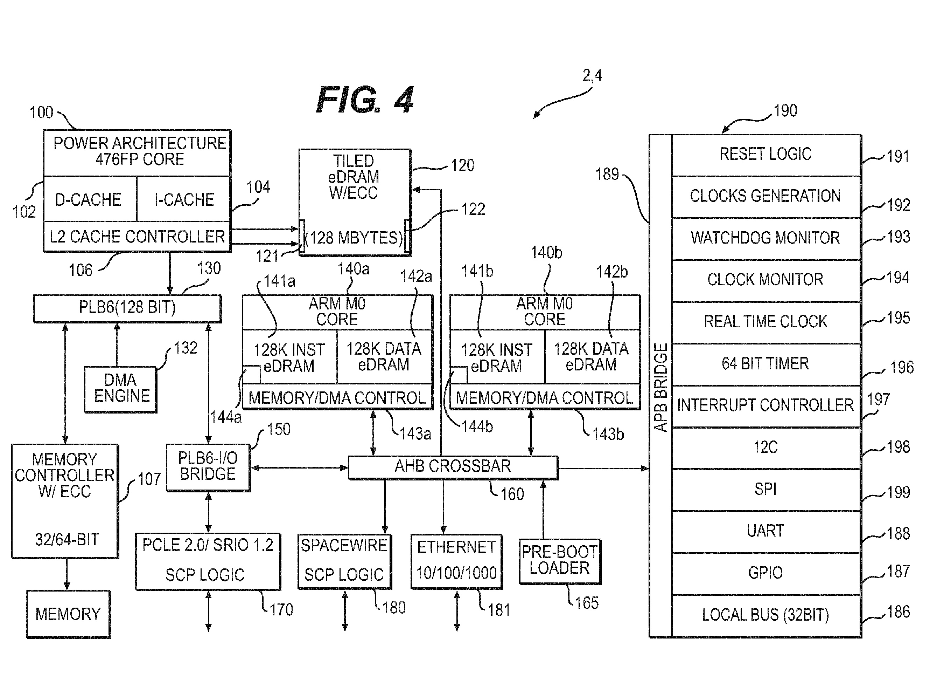

A watch dog monitor 193 is clocked with the SoC system clock 8 and may be provided to ensure proper software operation of the SoC (2, 4) and may be configurable by a Pre-Boot Loader (See, FIG. 4). The watch dog monitor remains satisfied when software writes a correct sequence of data within a specified time period. The expiration of the watch dog monitor 193 may cause a processor reset or cause an interrupt.

A clock monitor module 194 checks the clock of the SoC 2 to an externally provided clock, where a variance greater than the tolerance limits of the input SoC clock may cause the SoC 2 to be placed in reset mode.

A real time clock module 195 may use the system clock of the SoC 2 for input and may have a resolution of 1.0 millisecond. The real time clock module 195 may be clocked to 1-4 or more 64-bit timers 196. The 64-bit timers 196 may send interrupts to the secondary processors (140a/140b) and to a DMA Engine 132 (See FIG 4) and may be cascaded.

A programmable interrupt controller 197 may be included to support internal and external interrupt sources such as peripherals, timers and processors. The programmable interrupt controller 197 may route any interrupt to one of several outputs. Interrupts may also be routed to a secondary processor (140a/140b) and/or to the primary processor 100.

An I2C module may also be included to provide duplex, synchronous serial communication to non-volatile serial memories or other peripherals such as Analog to Data and Data to Analog converters.

An SPI module may also be included to perform simplex, synchronous serial communication to non-volatile serial memories or other peripherals such as Analog to Data and Data to Analog converters.

A Universal Asynchronous Receiver/Transmitter (UART) 188 may also be included. A UART translates data between parallel and serial forms to provide full-duplex asynchronous serial communication to serial standard busses such as RS-232 and RS-485.

FIG. 4 is another illustration of a preferred embodiment of the SoC 2 or SoC 4. In the interest of brevity, like numbers refer to like components. Further, some components previously discussed may not be discussed further herein below.

In some preferred embodiments the primary processor 100 may have one or more integrated L1 caches (102, 104). The primary processor 100 may also include an L2 cache memory controller 106 that may communicate with memory device 120 via independent instruction and data port 121 and port 122.

In some preferred embodiments the primary processor 100 may be a PowerPC^{™} 476FP processor core manufactured by IBM Corporation headquartered in Armonk, New York. The 476FP primary processor is a 32-bit superscalar processor core with an integrated double-precision floating-point unit and coherency-enabled L1 caches (102, 104). The PowerPC 476FP is fully compliant with the flexible and scalable Power Instruction Set Architecture (ISA), version 2.05.

The PowerPC 476FP core contains up to five 5-issues, 9-stage execution pipelines and two floating-point pipelines. Memory management is optimized for multitasking embedded environments and symmetric multiprocessor systems. Additional functions include cache control, power control, timers, and debug facilities. Companion cores include an L2 cache controller (not shown) that supports memory coherency, a processor local bus controller (not shown) that supports coherent and non-coherent functional blocks, and a synchronous DRAM memory controller 107 with coherency support. A non-limiting example of a synchronous DRAM is a DDR3 controller.

In preferred embodiments, the embedded memory device 120 may be tiled eDRAM with ECC circuitry. In other equivalent embodiments a triple modular Redundant (TMR) array that provides a more robust reduction in rate of ionization upset. The memory device 120 may be of any size, but comprises more that 64 megabytes and preferably 128 megabytes of memory capacity or more. The memory device may comprise two or more I/O ports to allow simultaneous deterministic access by the primary processor 100 and the secondary processor(s) (140a/140b). Port 0(121) may be reserved for data access by the primary processor 100. Port 1 (122) may be split between providing access for primary processor instructions and providing access for I/O access by the secondary processors (140a/140b). This port arrangement of the memory device 120 produces a dual ported I/O memory area or subsection of memory device 120 that is shared between the primary processor 100 and the secondary processors (140a/140b).

In some embodiments, a non-limiting example of a primary processor shared bus 130 may be a CoreConnect^{™} PLB6 (128 bit) bus produced by IBM Corporation. The PLB6 bus resembles a fabric with high speed point to point links, with each link having 128 bit read and 128 bit write data paths that operate at one half of the primary processor 100 clock speed. The bus fabric on the PLB6 is capable of supporting up to 8 coherent master elements, providing the flexibility to mix and match I/O masters, processors and other accelerators within the fabric. The high throughput of this bus is due to its fabric structure with up to eight slave segments that can simultaneously receive or transmit Data. Each slave segment may have up to 4 slaves. It is possible, in approximately 45nm technology and without any pre-placement in silicon, to operate the bus structure at up to approximately 800MHz.

As non-limiting examples of secondary processors, the secondary processors 140a/140b may be ARM M0 processor cores from ARM Ltd headquartered in Cambridge, England. The ARM M0 provides a high performance 32-bit CPU featuring deterministic operation and a low latency 3-stage pipeline. The secondary processors 140a/140b may each also include one or more instruction eDRAMs (141a/142a, 141b/142b) and a Direct Memory Access (DMA) controller (143a/143b) to control memory access. The instruction eDRAMs (141a/142a, 141b/142b) may contain the I/O tables 144a or b, respectively.

In some embodiments, the secondary bus 160 may be an Advance Microprocessor Bus Architecture High-speed Bus (AHB). AHB is a bus protocol introduced in Advanced Microcontroller Bus Architecture version 2 published by ARM Ltd. A simple transaction on the AHB consists of an address phase and a subsequent data phase using only two bus cycles (without wait states). Access to a target device is controlled through a non-tristate multiplexer, thereby admitting bus-access to one device at a time.

As non-limiting example of an I/O bridge, an I/O bridge may be a PLB-6 I/O bridge. A PLB6 I/O bridge may provide full bandwidth DMA between the primary processor shared bus 130 and the I/O interface 170 and would be synchronous with both the primary processor shared bus 130 and the secondary bus 160.

In some preferred embodiments, the SoC 2 may include a pre-boot loader 165 which may be in operable communication with embedded memory device 120 via the secondary bus 160. When the primary processor 100 is in reset mode, the pre-boot loader 165 may load core software and configuration settings for the primary processor 100 to the embedded memory device. Once the embedded memory device is loaded, the primary processor 100 is released from reset mode and executes its core functions stored in the embedded memory device. As one of those core functions, the primary processor 100 may take over the loading of any remaining core and application software/tables from external code sources via one f the external interfaces to the embedded memory device 120. The primary processor 100 may also load and release the secondary processors.

In some embodiments, the synchronous DRAM memory controller 107 may be a 32/64 bit double data rate type three (DDR3) memory controller. A DDR3 memory controller may run at half the bus frequency of the primary processor shared bus (PLB 6).

In some embodiments, the SoC 2 may include a two-channel direct memory access (DMA) engine 132 and may communicate with the primary processor shared bus 130. The DMA engine 132 may allow certain hardware subsystems within the computer to access system memory independently of the primary processor. The DMA engine allows the CPU to initiate a data transfer, do other operations while the transfer is in progress, and receive an interrupt from the DMA engine once the operation has been done. This is useful any time one can perform useful work while waiting for a relatively slow I/O data transfer, thereby allowing computation and data transfer to proceed in parallel. The DMA engine may have a chained memory mode and a direct memory mode. The term "chaining" refers to the chaining together of multiple simple DMA request to off-load multiple input/output interrupt and data copy tasks from the CPU.

In some embodiments, the SoC 2 may include a Spacewire interface 180, a full and half duplex Ethernet interface 181 and/or a PCIe/SRIO interface 170, as may be known in the art. The Ethernet interface may have two or more IEEE 802.3, 802.3u, 802.3x, 802.3z, 802.3ac, 802.3ab compatible links and supports the 1000 Mbps full-duplex reduced megabyte media independent physical interface and the 10/100 Mbps IEEE 802.3 reduced media physical interface. The Spacewire interface 180 provides two or more full-duplex, synchronous serial communications links operating up to 400 MHz. The dual PCIe and dual Serial RapidIO interfaces provide access to high speed multi-channel serial protocol busses. These interfaces may be of root complex and/or end node types.

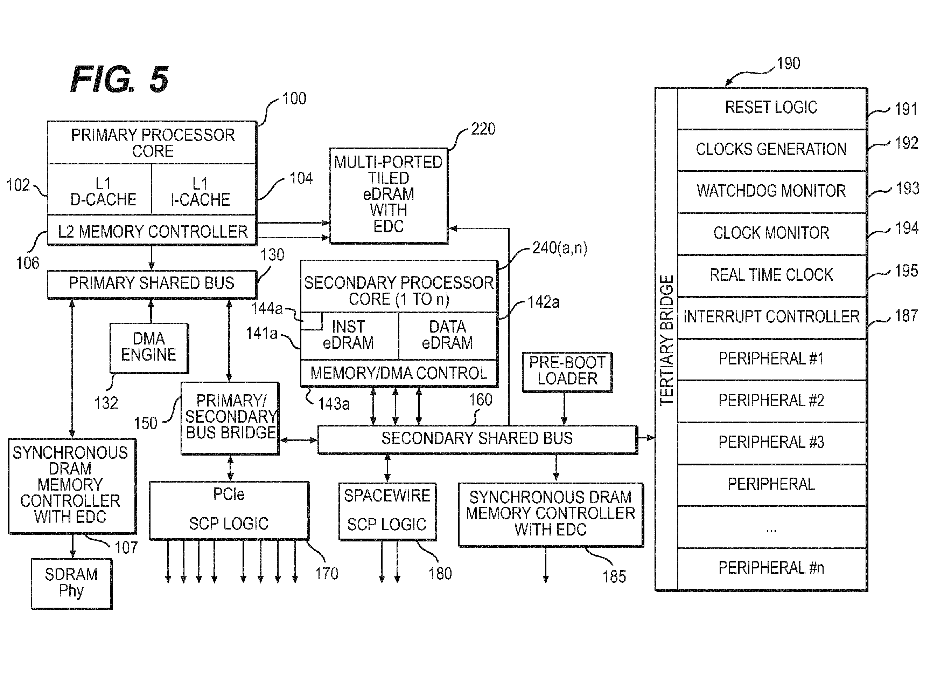

FIG. 5 is a simplified block diagram of an alternative embodiment of the low latency, low power, least volume SoC 2 of FIG. 1. FIG. 5 is different from FIG. 1 by the replacement of the Ethernet external I/O interface 181 with a synchronous DRAM memory controller 285. The synchronous DRAM memory controller 285 may have error detection code such linear block coding such as Hamming codes, or other single error correction double error detection (SEC-DED) linear coding. The synchronous Dram memory controller 185 provides the secondary processors with large program and data memory access for applications that need more memory than provided by the internal memory arrays.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the disclosed subject matter in any way. Rather, the foregoing detailed description will provide those skilled in the art with a convenient road map for implementing an exemplary embodiment. It being understood that various changes may be made in the function and arrangement of elements described in an exemplary embodiment without departing from the scope of the claimed subject matter as set forth in the appended claims.

## Claims

1. A system integrated on a single die, the single die comprising:
a primary shared bus;
a secondary shared bus;
an embedded dynamic random access memory (eDRAM);
a primary processor in operable communication with the eDRAM;
a secondary processor in operable communication with the eDRAM via the secondary shared bus, wherein the primary processor and the secondary processor operate in synchronization;
a first external interface in operable communication with the primary processor via the primary shared bus; and
a second external interface in operable communication with the secondary processor via the secondary shared bus.

2. The system of claim 1, wherein the eDRAM is a tiled eDRAM configured as a level 2 (L2) memory.

3. The system of claim 1, wherein the eDRAM is a tiled eDRAM and comprises at least two ports configured to allow simultaneous access by the primary processor and the secondary processor.

4. The system of claim 1, wherein the primary shared bus and the secondary shared bus are in operable communication via a bus bridge.

5. The system of claim 1, wherein multiple primary processors communicate via the primary shared bus.

6. The system of claim 1, wherein multiple secondary processors communicate via the secondary shared bus.

7. The system of claim 1, wherein the first processor and the second processor are each configured to communicate with the other exclusively via the eDRAM.

8. The system of claim 7, wherein communication across the secondary bus is driven by a data table.

9. The system of claim 1, wherein the secondary processor includes one or more 128k data eDRAMs and a direct memory access (DMA) controller.

10. The system of claim 1, wherein the secondary shared bus is an Advanced High speed Bus (AHB).

11. The system of claim 1, wherein the primary shared bus is a bus fabric.

12. The system of claim 6, wherein the multiple secondary processors are low power consumption 32-bit low latency, deterministic processors.

13. The system of claim 1, wherein the primary processor is a low power consumption 32-bit superscalar processor core with an integrated double-precision floating-point unit and coherency-enabled L1 caches.

14. The system of claim 1, wherein the primary processor includes two-32 kilobyte Level 1 (L1) caches and a L2 cache controller.
